# FASCICULE DE BREVET EUROPEEN

(11) **EP 2 916 426 B1**
(45) Date de publication et mention de la délivrance du brevet: **28.06.2017**
(21) Numéro de dépôt: 15157867.1
(22) Date de dépôt: 05.03.2015
(51) Int. Cl.: H02J 9/00, H02J 9/02, H05B 33/08, H05B 37/02, H02M 1/00

(54) **Dispositif d'éclairage tel qu'un bloc autonome d'éclairage de sécurité et procédé d'alimentation électrique d'un microcontrôleur dans un tel dispositif d'éclairage**
Beleuchtungsvorrichtung, wie z. B. ein autonomer Sicherheitsbeleuchtungsblock, und Stromversorgungsverfahren eines Mikroprozessors in einer solchen Beleuchtungsvorrichtung
Lighting device such as a self-contained emergency lighting block and method for supplying electricity to a microcontroller in such a lighting device

(30) Priorité: 06.03.2014 FR 1451823
(43) Date de publication de la demande: 09.09.2015
(73) Titulaire: Legrand France, 87000 Limoges (FR); Legrand SNC, 87000 Limoges (FR)
(72) Inventeur: Selas, Dominique, 87100 LIMOGES (FR); Dauphin, Michel, 87000 LIMOGES (FR)
(74) Mandataire: Novagraaf Technologies

(56) Documents cités:
- WO-A2-03/005544
- FR-A1- 2 772 170
- JP-A- 2009 118 589
- US-A1- 2013 293 135
- US-B1- 6 502 044

## Description

### DOMAINE TECHNIQUE DE L'INVENTION

La présente invention concerne un dispositif d'éclairage et un procédé d'alimentation électrique d'un microcontrôleur dans un tel dispositif d'éclairage.

### ETAT DE LA TECHNIQUE ANTERIEURE

Des dispositifs d'éclairages, tels que des éclairages d'ambiance pour des locaux publics ou privés tels que des couloirs, ou des éclairages de sécurité, sont bien connus.

De tels dispositifs d'éclairage comprennent un microcontrôleur électronique et des moyens d'éclairage, et sont reliés à une source électrique extérieure, telle qu'un réseau électrique domestique. La source électrique extérieure fournit un premier courant électrique d'alimentation. En fonctionnement nominal, les moyens d'éclairage n'émettent aucun signal lumineux. Si l'alimentation électrique provenant de la source extérieure est coupée, c'est-à-dire si la valeur du premier courant électrique d'alimentation est nulle, le dispositif d'éclairage passe en mode « secours » et les moyens d'éclairage émettent un signal lumineux destiné à orienter des usagers. Un deuxième courant électrique d'alimentation est alors fourni par un module de stockage d'énergie agencé au sein du dispositif d'éclairage. Au bout d'une certaine durée, imposée par des contraintes normatives, les moyens d'éclairage cessent d'émettre le signal lumineux et le dispositif d'éclairage passe en mode « repos ».

Une problématique rencontrée dans ce type de dispositif d'éclairage est celle de son alimentation électrique dans les modes « secours » et « repos », autrement dit de la fourniture du deuxième courant électrique d'alimentation. En effet, un tel dispositif nécessite dans ces deux modes une tension minimale de fonctionnement, notamment pour assurer l'alimentation électrique du microcontrôleur. La tension minimale de fonctionnement d'un tel microcontrôleur présente une valeur spécifique, liée à l'utilisation du dispositif d'éclairage, car un tel microcontrôleur est configuré pour être alimenté électriquement par l'élément de stockage d'énergie uniquement dans les modes « secours » et « repos », et pour être alimenté électriquement par la source électrique en fonctionnement nominal. Par ailleurs, la capacité du module de stockage d'énergie doit être suffisante afin de pouvoir assurer la durée minimale d'autonomie lumineuse du dispositif d'éclairage imposée par les normes.

Une solution connue pour répondre à cette double exigence consiste à utiliser, en guise de module de stockage d'énergie, deux éléments d'accumulateurs connectés en série.

Toutefois, les progrès technologiques récents accomplis dans le domaine des diodes électroluminescentes ont permis d'augmenter le rendement énergétique de ces composants. Ainsi, à périmètre-flux constant, de telles diodes électroluminescentes utilisées en tant que moyens d'éclairages induisent un besoin en énergie de moins en moins élevé. Ainsi, les dispositifs d'éclairage comprenant deux éléments d'accumulateurs connectés en série sont susceptibles d'être surdimensionnés en terme de capacité de stockage d'énergie, au regard de la quantité d'énergie requise pour alimenter les moyens d'éclairage. Ceci engendre un surcoût, lié à la surcapacité « inutile » du module de stockage d'énergie.

Les documents brevet JP 2009 118589 A et US 6 502 044 B1 décrivent chacun un dispositif d'éclairage comprenant un microcontrôleur électronique, des moyens d'éclairage, un élément de stockage d'énergie relié aux moyens d'éclairage, un module survolteur et un organe de mesure d'une tension électrique d'entrée d'alimentation du microcontrôleur. Le microcontrôleur est muni d'une borne d'entrée reliée à une source électrique, et est propre à émettre un signal de commande du module survolteur, pour la commande de ce module en fonction de la valeur de la tension électrique d'entrée d'alimentation mesurée. Le module survolteur est connecté entre l'élément de stockage d'énergie et la borne d'entrée du microcontrôleur. Toutefois, un tel dispositif d'éclairage, s'il permet de fournir une tension minimale de fonctionnement aux moyens d'éclairage lorsque le dispositif est en mode « secours », implique en revanche une consommation énergétique élevée, ce qui génère des surcoûts liés à cette surconsommation.

### EXPOSE DE L'INVENTION

Le dispositif décrit par la suite vise à remédier à tout ou partie des inconvénients de l'état de la technique et notamment à réaliser de manière simple et fiable un dispositif d'éclairage, par exemple un bloc autonome d'éclairage de sécurité, comprenant un élément de stockage d'énergie de faible capacité et permettant de réduire la consommation énergétique du dispositif, tout en maintenant une tension de fonctionnement adéquate quel que soit le mode de fonctionnement du dispositif et en réduisant les coûts.

A cet effet, l'invention a pour objet un dispositif d'éclairage comprenant:
- un microcontrôleur électronique muni d'une borne d'entrée propre à être reliée à une source électrique fournissant un premier courant électrique d'alimentation,
- des moyens d'éclairage propres à émettre un signal lumineux lorsque la valeur d'une grandeur relative au premier courant électrique d'alimentation est nulle ou inférieure à un seuil prédéterminé,
- un seul élément de stockage d'énergie relié aux moyens d'éclairage, l'élément de stockage d'énergie étant propre à fournir, lorsque la valeur de la grandeur relative au premier courant électrique d'alimentation est nulle ou inférieure à un seuil prédéterminé, un deuxième courant électrique d'alimentation, pour l'alimentation conjointe des moyens d'éclairage et du microcontrôleur,

- un module survolteur connecté entre l'élément de stockage d'énergie et la borne d'entrée du microcontrôleur,
- un organe de mesure d'une tension électrique d'entrée d'alimentation du microcontrôleur, relié au microcontrôleur, le microcontrôleur étant propre à émettre un signal de commande du module survolteur, pour la commande dudit module en fonction de la valeur de la tension électrique d'entrée d'alimentation mesurée ;
dans lequel un circuit survolteur est en outre connecté entre l'élément de stockage d'énergie et les moyens d'éclairage et la borne d'entrée du microcontrôleur électronique est reliée aux moyens d'éclairage.

Un tel dispositif d'éclairage est spécialement configuré pour être alimenté électriquement par la source électrique au moment de son initialisation, ainsi qu'en fonctionnement nominal.

Le fait que le dispositif d'éclairage ne comporte qu'un seul élément de stockage d'énergie, combiné à la présence d'un organe de mesure d'une tension électrique d'entrée d'alimentation du microcontrôleur, au sein du dispositif d'éclairage, et au fait que le microcontrôleur est propre à commander le module survolteur en fonction de la valeur de la tension électrique mesurée, permet de dimensionner de manière optimale la capacité de stockage d'énergie avec le flux énergétique nécessaire, éliminant ainsi toute surcapacité inutile du module de stockage d'énergie, tout en garantissant la fourniture d'une tension minimale de fonctionnement quel que soit le mode de fonctionnement du dispositif. Ainsi, la consommation énergétique du dispositif est avantageusement réduite, tout en maintenant une tension de fonctionnement adéquate quel que soit le mode de fonctionnement du dispositif.

Par ailleurs, la présence du module survolteur, combinée au fait que la borne d'entrée du microcontrôleur est reliée aux moyens d'éclairage, permet de fournir une tension de valeur supérieure à la tension minimale de fonctionnement du microcontrôleur, et d'ainsi réduire la consommation énergétique du dispositif d'éclairage.

En outre, le fait d'utiliser un module survolteur, commandé directement par le microcontrôleur en fonction de la valeur de la tension électrique mesurée, procure l'avantage additionnel de fournir un moyen simple, fiable et peu coûteux d'assurer une gestion précise de la consommation électrique du microcontrôleur en mode repos. La consommation électrique du microcontrôleur dans ce mode est par conséquent précisément ajustée. Ces caractéristiques du dispositif d'éclairage permettent ainsi de réduire la consommation énergétique en mode repos du dispositif, et donc d'augmenter avantageusement la durée de décharge complète de l'élément de stockage d'énergie. Selon une caractéristique technique particulière de l'invention, le module survolteur est un convertisseur électrique de type boost.

Un tel convertisseur électrique est un circuit électrique passif et permet, à ce titre, de réduire avantageusement les coûts liés à la fabrication et à la consommation électrique du module survolteur.

Dans une réalisation particulière de l'invention, le convertisseur électrique de type boost comporte une inductance, une diode, un condensateur et un composant électronique semi-conducteur de commutation, tel qu'un transistor, ledit composant électronique comprenant deux électrodes de conduction et une électrode de commande, une des électrodes de l'inductance étant connectée à une des électrodes de conduction du composant électronique en un premier point de connexion, la diode étant connectée par son anode au premier point de connexion et par sa cathode à une des électrodes du condensateur, en un deuxième point de connexion, le deuxième point de connexion étant relié à la borne d'entrée du microcontrôleur, le signal de commande du module survolteur étant destiné à être appliqué sur l'électrode de commande du composant électronique.

Dans une autre réalisation particulière de l'invention, les moyens d'éclairage comprennent au moins une diode électroluminescente et une diode, de préférence une diode Schottky, connectée entre l'anode de la diode électroluminescente et la borne d'entrée du microcontrôleur, la cathode de la diode électroluminescente étant reliée à une masse électrique.

Cette caractéristique permet de réinjecter un courant électrique d'auto alimentation sur la borne d'entrée du microcontrôleur électronique.

Selon une caractéristique technique particulière de l'invention, l'élément de stockage d'énergie est un élément d'accumulateurs, de préférence un élément d'accumulateurs de type NiMH ou NiCd présentant une tension nominale de valeur sensiblement égale à 1,2 V.

Selon une autre caractéristique technique particulière de l'invention, l'élément de stockage d'énergie est une pile alcaline, de préférence une pile alcaline présentant une tension nominale de valeur sensiblement égale à 1,5 V.

Avantageusement, le microcontrôleur présente une tension minimale de fonctionnement, l'élément de stockage d'énergie présentant une tension nominale de valeur inférieure à la valeur de la tension minimale de fonctionnement du microcontrôleur.

Une telle caractéristique permet de réduire encore la capacité de l'élément de stockage d'énergie, tout en assurant, via la présence du module survolteur, la tension minimale de fonctionnement du microcontrôleur.

Selon une caractéristique technique particulière de l'invention, l'élément de stockage d'énergie est un élément électrique rechargeable propre à être relié à la source électrique pour sa charge électrique.

La présence d'un seul élément de stockage d'énergie propre à être relié à la source électrique pour sa charge électrique permet de faciliter la maintenance du dispositif d'éclairage, en réduisant significativement les opérations liées au remplacement des éléments du module de stockage d'énergie. En outre, cette configuration est particulièrement adaptée pour un dispositif d'éclairage propre à être relié à une source électrique, tel qu'un bloc autonome de sécurité par exemple, car elle évite une décharge progressive de l'élément de stockage d'énergie au cours du temps et permet une réduction des coûts avantageuse. Cette caractéristique permet également de réduire le niveau de courant nécessaire sur la source électrique pour la charge de l'élément de stockage d'énergie, par comparaison avec les dispositifs de l'art antérieur comprenant deux éléments de stockage connectés en série. Les coûts sont ainsi avantageusement réduits, notamment les coûts liés aux pertes électriques lors de cette opération de charge.

Selon un autre aspect, l'invention a également pour objet un système électronique comprenant une pluralité de dispositifs d'éclairage et un organe de surveillance des dispositifs d'éclairage, l'organe de surveillance étant relié à chaque dispositif d'éclairage, dans lequel chaque dispositif d'éclairage est tel que décrit ci-dessus.

Selon un autre aspect, l'invention a aussi pour objet un procédé d'alimentation électrique d'un microcontrôleur dans un dispositif d'éclairage, le microcontrôleur étant muni d'une borne d'entrée propre à être reliée à une source électrique fournissant un premier courant électrique d'alimentation, le dispositif d'éclairage comprenant en outre des moyens d'éclairage propres à émettre un signal lumineux lorsque la valeur d'une grandeur relative au premier courant électrique d'alimentation est nulle ou inférieure à un seuil prédéterminé, un seul élément de stockage d'énergie relié aux moyens d'éclairage, un module survolteur connecté entre l'élément de stockage d'énergie et la borne d'entrée du microcontrôleur, et un organe de mesure d'une tension électrique d'entrée d'alimentation du microcontrôleur, relié au microcontrôleur, le procédé comprenant une étape initiale, lorsque la valeur de la grandeur relative au premier courant électrique d'alimentation est nulle ou inférieure à un seuil prédéterminé, de fourniture par l'élément de stockage d'énergie d'un deuxième courant électrique d'alimentation, le procédé comprenant en outre, lorsque la valeur de la grandeur relative au premier courant électrique d'alimentation est nulle ou inférieure à un seuil prédéterminé, les étapes suivantes :
- la mesure, par l'organe de mesure, de la tension électrique d'entrée d'alimentation du microcontrôleur, et
- la commande, par le microcontrôleur, du module survolteur, via l'émission d'un signal de commande à destination du module survolteur, la commande étant fonction de la valeur de la tension électrique d'entrée d'alimentation mesurée ;
dans lequel un circuit survolteur est en outre connecté entre l'élément de stockage d'énergie et les moyens d'éclairage et la borne d'entrée du microcontrôleur électronique est reliée aux moyens d'éclairage, de sorte à réinjecter, sur la borne d'entrée du microcontrôleur, un courant électrique d'alimentation des moyens d'éclairage.

Avantageusement, l'étape de commande du module survolteur comprend une première sous-étape au cours de laquelle le microcontrôleur compare la valeur de la tension électrique d'entrée d'alimentation mesurée à deux valeurs de tension prédéterminées, et une deuxième sous-étape au cours de laquelle le microcontrôleur détermine l'émission ou non du signal de commande du module survolteur en fonction du résultat de la comparaison effectuée lors de la première sous-étape, la commande consistant en une non émission du signal de commande permettant une désactivation du module survolteur lorsque la valeur de la tension électrique d'entrée d'alimentation mesurée est égale à une première valeur de tension prédéterminée, et en une émission du signal de commande permettant une activation du module survolteur lorsque la valeur de la tension électrique d'entrée d'alimentation mesurée est égale à une deuxième valeur de tension prédéterminée, ladite deuxième valeur de tension étant inférieure à la première valeur de tension.

Cette caractéristique permet de réduire la consommation électrique du module survolteur et d'ainsi réduire encore la consommation énergétique du dispositif.

### BREVE DESCRIPTION DES FIGURES

D'autres caractéristiques et avantages de l'invention ressortiront à la lecture de la description qui suit, donnée uniquement à titre d'exemple, et faite en référence à :
- la figure 1 est une représentation schématique d'un système électronique comprenant plusieurs dispositifs d'éclairage selon un mode de réalisation de l'invention, chaque dispositif d'éclairage comportant un microcontrôleur et un module survolteur ;
- la figure 2 est un schéma électrique du module survolteur d'un des dispositifs d'éclairage de la figure 1 selon un mode de réalisation de l'invention, le module survolteur comprenant un condensateur ;
- la figure 3 est un organigramme représentant un procédé d'alimentation électrique du microcontrôleur d'un des dispositifs d'éclairage de la figure 1 ; et
- la figure 4 est un diagramme représentant l'évolution de la tension d'entrée d'un des microcontrôleurs de la figure 1, en fonction de l'émission ou non d'un signal de commande par le microcontrôleur.

### DESCRIPTION DETAILLEE D'UN MODE DE REALISATION

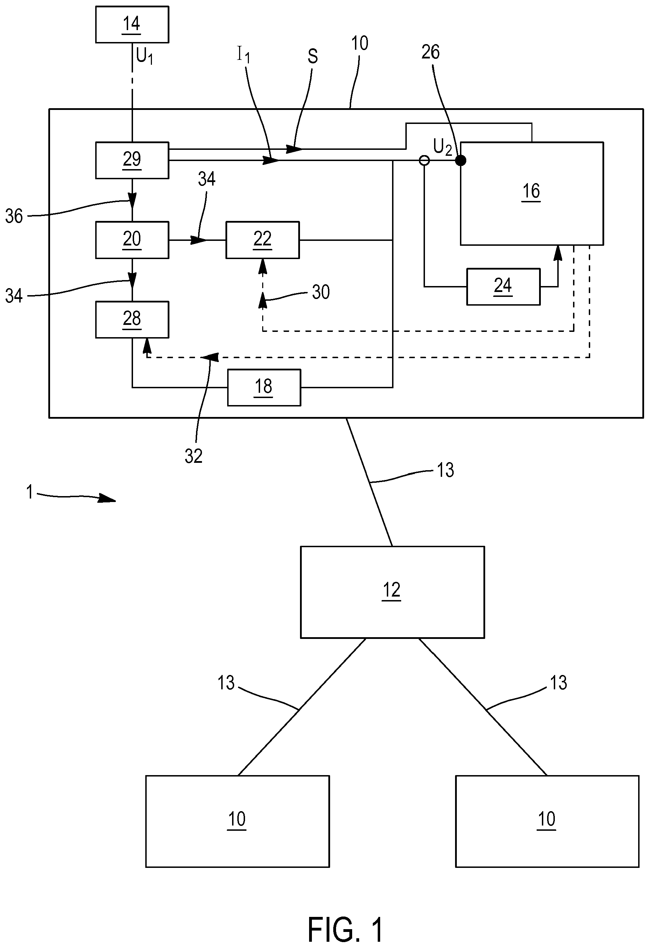

En référence à la figure 1, un système électronique 1 comprend au moins deux dispositifs d'éclairage 10 et un organe 12 de surveillance des dispositifs d'éclairage 10, relié à chaque dispositif d'éclairage 10 via une liaison de données 13. Dans l'exemple de réalisation de la figure 1, le système électronique 1 comprend trois dispositifs d'éclairage 10.

Chaque dispositif d'éclairage 10 est par exemple un bloc autonome d'éclairage de sécurité installé à demeure au sein d'un bâtiment.

Chaque dispositif d'éclairage 10 est relié à une source d'alimentation électrique 14 fournissant un courant électrique d'alimentation. La source électrique 14 est par exemple une source de courant alternatif. Dans l'exemple de réalisation de la figure 1, la source électrique 14 est une source de courant alternatif monophasé. Le courant électrique d'alimentation fourni par la source électrique 14 à chaque dispositif d'éclairage 10 présente une tension électrique d'alimentation U1, de valeur par exemple égale à 230 V phase neutre.

Chaque dispositif d'éclairage 10 comporte un microcontrôleur électronique 16, des moyens d'éclairage 18, et un élément 20 de stockage d'énergie relié aux moyens d'éclairage 18. Chaque dispositif d'éclairage 10 comporte en outre un module survolteur 22 connecté entre l'élément de stockage d'énergie 20 et le microcontrôleur 16, et un organe 24 de mesure d'une tension électrique U2 d'entrée d'alimentation du microcontrôleur 16, relié au microcontrôleur 16. Comme illustré sur la figure 1, chaque dispositif d'éclairage 10 comporte en outre un circuit survolteur 28 connecté entre l'élément de stockage d'énergie 20 et les moyens d'éclairage 18.

Dans l'exemple de réalisation de la figure 1, chaque dispositif d'éclairage 10 comporte en outre un module d'alimentation électrique 29 connecté à la source d'alimentation électrique 14. Le module d'alimentation électrique 29 est également connecté au microcontrôleur 16 pour la fourniture d'un courant électrique I1 d'alimentation au microcontrôleur 16, et à l'élément de stockage d'énergie 20. Le module d'alimentation électrique 29 est également propre à transmettre au microcontrôleur 16 un signal S indicatif de la présence ou non du courant électrique d'alimentation fourni par la source 14.

Dans l'exemple de réalisation de la figure 1, le microcontrôleur 16 est formé d'un circuit intégré propre à piloter les différents composants électriques et électroniques du dispositif d'éclairage 10. Le microcontrôleur 16 présente une tension minimale de fonctionnement, de valeur par exemple sensiblement égale à 1,8 V dans l'exemple de réalisation de la figure 1.

Le microcontrôleur 16 est muni d'une borne d'entrée 26 reliée au module d'alimentation électrique 29 et au module survolteur 22. La borne d'entrée 26 est également reliée aux moyens d'éclairage 18, comme détaillé par la suite. Le microcontrôleur 16 est propre à émettre un signal 30 de commande du module survolteur 22, pour la commande du module survolteur 22 en fonction de la valeur de la tension électrique U2 d'entrée d'alimentation mesurée. Dans l'exemple de réalisation de la figure 1, le microcontrôleur 16 est propre en outre à émettre un signal 32 de commande du circuit survolteur 28.

Dans le mode de réalisation de la figure 1, chaque signal de commande 30, 32 est un signal de commande obtenu par modulation de largeur d'impulsions, par exemple un signal rectangulaire. Chaque signal de commande 30, 32 présente par exemple une fréquence sensiblement égale à 60 kHz.

Les moyens d'éclairage 18 sont propres à émettre un signal lumineux lorsque la valeur de l'intensité et/ou de la tension U1 du courant électrique d'alimentation fourni par la source électrique 14 est nulle. Dans un mode de réalisation particulier, les moyens d'éclairage 18 comprennent au moins une diode électroluminescente et une diode, de préférence une diode Schottky, connectée entre l'anode de la diode électroluminescente et la borne d'entrée 26 du microcontrôleur 16. La cathode de la diode électroluminescente est par exemple reliée à une masse électrique. La connexion de la diode entre l'anode de la diode électroluminescente et la borne d'entrée 26 permet de réinjecter un courant électrique d'auto alimentation sur la borne d'entrée 26, comme explicité par la suite.

Dans l'exemple de réalisation de la figure 1, les moyens d'éclairage 18 comprennent deux diodes électroluminescentes connectées en série en un point de connexion, et la diode est une diode Schottky connectée entre le point de connexion et la borne d'entrée 26 du microcontrôleur 16. Chaque diode électroluminescente présente par exemple un flux lumineux de valeur sensiblement égale à 30 lm.

L'élément de stockage d'énergie 20 est un élément électrique rechargeable propre à être relié à la source électrique 14 pour sa charge électrique. L'élément de stockage d'énergie 20 est propre à fournir sur au moins une sortie, lorsque la valeur de l'intensité du courant électrique d'alimentation fourni par la source électrique 14 est nulle ou lorsque la valeur de la tension U1 devient inférieure à une valeur de tension seuil correspondant à une valeur normative de déclenchement d'un mode « secours » du dispositif d'éclairage 10, un courant électrique d'alimentation 34. Dans l'exemple de réalisation de la figure 1, l'élément de stockage d'énergie 20 présente deux sorties et est propre à fournir sur chacune de ses sorties le courant 34 pour l'alimentation électrique conjointe des moyens d'éclairage 18 et du microcontrôleur 16.

L'élément de stockage d'énergie 20 présente avantageusement une tension nominale de valeur inférieure à la valeur de la tension minimale de fonctionnement du microcontrôleur 16. Cela permet de réduire avantageusement la capacité de l'élément de stockage d'énergie 20, tout en assurant, via la présence du module survolteur 22, la tension minimale de fonctionnement du microcontrôleur 16.

Dans l'exemple de réalisation de la figure 1, l'élément de stockage d'énergie 20 est un élément d'accumulateurs de type NiMH présentant une tension nominale de valeur sensiblement égale à 1,2 V. L'élément d'accumulateurs de type NiMH présente une capacité de valeur par exemple sensiblement égale à 1,7 Ah. Le module d'alimentation électrique 29 est apte à charger l'élément d'accumulateurs 20, via la fourniture d'un courant de charge 36.

En variante, l'élément de stockage d'énergie 20 est un élément d'accumulateurs de type NiCd, par exemple un élément d'accumulateurs de type NiCd présentant une tension nominale de valeur sensiblement égale à 1,2 V. En variante encore, l'élément de stockage d'énergie 20 est une pile alcaline, de préférence une pile alcaline présentant une tension nominale de valeur sensiblement égale à 1,5 V. Selon cette variante, le module d'alimentation électrique 29 n'est pas apte à charger l'élément de stockage d'énergie 20 et n'est donc pas relié à cet élément de stockage 20. En variante encore, l'élément de stockage d'énergie 20 est un condensateur ou un ensemble de condensateurs reliés entre eux. En variante encore, l'élément de stockage d'énergie 20 est un supercondensateur ou un ensemble de supercondensateurs reliés entre eux.

Le module survolteur 22 est connecté entre l'élément de stockage d'énergie 20 et la borne d'entrée 26 du microcontrôleur 16. Dans un mode de réalisation particulier, le module survolteur 22 est un convertisseur électrique de type boost. L'emploi d'un tel convertisseur électrique de type boost en tant que module survolteur 22 permet de réduire avantageusement les coûts liés à la fabrication et à la consommation électrique du module survolteur 22.

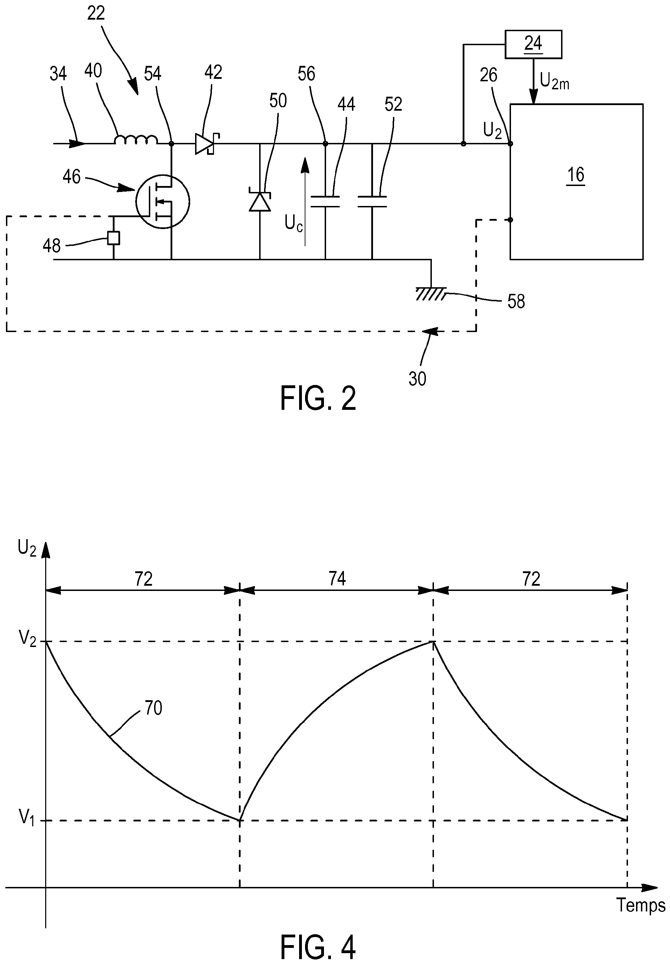

Dans l'exemple de réalisation illustré sur la figure 2, le convertisseur électrique de type boost 22 comporte une inductance 40, une diode 42, un condensateur 44, et un transistor 46 à effet de champ à grille isolée de type N, appelé par la suite transistor NMOS (de l'anglais N-type Metal Oxyde Semiconductor). Le dispositif d'éclairage 10 comporte en outre de préférence une résistance de protection 48, une diode de protection 50 et un condensateur de découplage 52.

Une des électrodes de l'inductance 40 est connectée à une sortie de l'élément de stockage d'énergie 20. L'autre électrode de l'inductance 40 est connectée au drain du transistor NMOS 46 en un premier point de connexion 54.

Dans l'exemple de réalisation de la figure 2, la diode 42 est une diode Schottky. La diode 42 est connectée par son anode au premier point de connexion 54 et par sa cathode à une des électrodes du condensateur 44, en un deuxième point de connexion 56. L'autre électrode du condensateur 44 est connectée à une masse électrique 58. Le deuxième point de connexion 56 est relié à la borne d'entrée 26 du microcontrôleur 16.

Le condensateur 44 présente une tension Uc entre ses deux électrodes.

La source du transistor NMOS 46 est connectée à une masse électrique 58. Le signal 30 de commande du module survolteur 22 est destiné à être appliqué sur la grille du transistor NMOS 46. Le transistor NMOS 46 est propre à passer, sous l'action du signal de commande 30, d'un état passant à un état bloqué, et vice versa.

En variante, le transistor NMOS 46 est remplacé par un transistor à effet de champ à grille isolée de type P. En variante encore, le transistor NMOS 46 est remplacé par tout composant électronique semi-conducteur de commutation comprenant une électrode de commande et deux électrodes de conduction, tel qu'un transistor bipolaire, un transistor bipolaire à grille isolée IBGT (de l'anglais Insulated Gâte Bipolar Transistor), un transistor à effet de champ, un thyristor, un thyristor à extinction par la gâchette, un thyristor IGCT (de l'anglais Insulated Gate-Commutated Thyristor), ou un thyristor MCT (de l'anglais MOS Controlled Thyristor) par exemple.

La résistance de protection 48 est connectée entre la grille du transistor NMOS 46 et une masse électrique 58. La diode de protection 50 et le condensateur de découplage 52 sont chacun connectés en parallèle du condensateur 44.

Dans l'exemple de réalisation des figures 1 et 2, l'inductance 40 présente une valeur d'inductance sensiblement égale à 1 mH et le condensateur 44 présente une capacité de valeur sensiblement égale à 100 µF. En outre, la résistance de protection 48 présente une valeur de résistance par exemple sensiblement égale à 10 KΩ, et le condensateur de découplage 52 présente une capacité de valeur par exemple sensiblement égale à 100 nF.

L'organe de mesure 24 est propre à mesurer la tension électrique U2 d'entrée d'alimentation du microcontrôleur 16 et à transmettre au microcontrôleur 16 un signal U2m image de cette mesure. L'organe de mesure 24 est par exemple formé d'un capteur de tension, par exemple un capteur de type résistif.

Le circuit survolteur 28 est par exemple formé d'un convertisseur électrique de type boost analogue au convertisseur électrique 22 de la figure 2.

Dans un mode de réalisation particulier, l'organe de surveillance 12 est par exemple une centrale électronique installée au sein d'un serveur informatique. Dans ce mode de réalisation, l'organe de surveillance 12 est apte à détecter une panne d'un des dispositifs d'éclairage 10, et à émettre un signal d'alerte de panne lorsque qu'une telle détection est effectuée. L'analyse d'un tel signal d'alerte permet par exemple d'obtenir un diagnostic de la panne rencontrée, et/ou la planification d'une intervention de maintenance sur le dispositif d'éclairage 10 en panne.

Chaque liaison de données 13 est par exemple une liaison matérielle telle qu'un bus physique de données. En variante, chaque liaison de données 13 est une liaison sans fil permettant l'acheminement de données via un réseau de communication sans fil classique.

Le fonctionnement du dispositif d'éclairage 10 selon l'invention va désormais être expliqué.

En fonctionnement nominal, le signal S indique la présence du courant électrique d'alimentation fourni par la source 14. Le microcontrôleur 16 est alors alimenté par le courant électrique I1 fourni par le module d'alimentation électrique 29, et les moyens d'éclairage 18 n'émettent aucun signal lumineux. L'élément de stockage d'énergie 20, également alimenté électriquement par le module d'alimentation électrique 29, est alors chargé électriquement.

On suppose qu'à un instant donné, l'alimentation électrique provenant de la source électrique 14 est coupée, c'est-à-dire que la valeur de l'intensité du courant électrique d'alimentation est nulle ou que la valeur de la tension U1 devient inférieure à une valeur de tension seuil correspondant à une valeur normative de déclenchement d'un mode « secours » du dispositif d'éclairage 10. Le signal S indique l'absence du courant électrique d'alimentation fourni par la source 14 et le dispositif d'éclairage 10 passe alors dans le mode « secours », les moyens d'éclairage 18 émettant un signal lumineux par exemple destiné à orienter des usagers. Au bout d'une certaine durée, imposée par des contraintes normatives, les moyens d'éclairage 18 cessent d'émettre le signal lumineux et le dispositif d'éclairage 10 passe en mode « repos ».

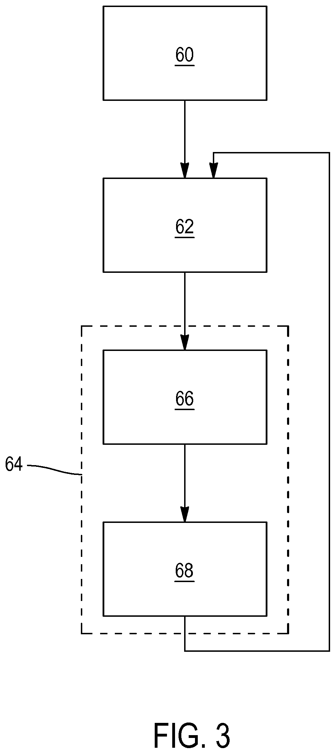

Sur la figure 3 sont représentées les étapes d'un procédé d'alimentation électrique du microcontrôleur 16 d'un des dispositifs d'éclairage 10, mis en oeuvre par ce dispositif d'éclairage 10.

On suppose qu'initialement, c'est-à-dire au début du mode « secours » du dispositif d'éclairage 10, le transistor NMOS 46 est dans son état bloqué.

Au cours d'une étape initiale 60, l'élément de stockage d'énergie 20 fournit le courant électrique d'alimentation 34 sur chacune de ses sorties. La valeur de la tension du courant électrique d'alimentation 34 est égale à la valeur de la tension nominale de l'élément de stockage d'énergie 20. En particulier, selon l'exemple de réalisation de la figure 1, la tension électrique 34 présente une valeur sensiblement égale à 1,2V.

A l'issue de cette étape 60, le module survolteur 22 reçoit le courant électrique 34 fourni par l'élément de stockage d'énergie 20. Le module survolteur 22 augmente alors la valeur de la tension électrique de ce courant 34 de sorte à fournir sur la borne d'entrée 26 du microcontrôleur 16 une tension U2 de valeur supérieure ou égale à la tension minimale de fonctionnement du microcontrôleur 16. Plus précisément, dans l'exemple de réalisation de la figure 1, le module survolteur 22 fournit sur la borne d'entrée 26 du microcontrôleur 16 une tension U2 de valeur par exemple supérieure ou égale à 1,8 V.

Ainsi, dans le mode « secours du dispositif d'éclairage 10, le module survolteur 22, en combinaison avec la diode connectée entre l'anode de la diode électroluminescente des moyens d'éclairage 18 et la borne d'entrée 26, permet de fournir une tension de valeur supérieure à la tension minimale de fonctionnement du microcontrôleur 16. En effet, dans le mode « secours » du dispositif d'éclairage 10, la diode des moyens d'éclairage 18 est passante et un courant électrique d'auto alimentation est réinjecté sur la borne d'entrée 26.

Au cours d'une étape 62 suivante, l'organe 24 mesure la tension électrique U2 d'entrée d'alimentation du microcontrôleur 16 et transmet au microcontrôleur 16 le signal U2m image de cette mesure.

Au cours d'une étape suivante 64, le microcontrôleur 16 commande le module survolteur 22 en fonction de la valeur du signal U2m, c'est-à-dire de la valeur de la tension électrique U2 d'entrée d'alimentation mesurée. Plus précisément, l'étape de commande 64 comprend une première sous-étape 66 au cours de laquelle le microcontrôleur 16 compare la valeur du signal U2m à deux valeurs de tension prédéterminées. L'une des deux valeurs de tension prédéterminées correspond à la valeur de la tension minimale de fonctionnement du microcontrôleur 16, l'autre valeur correspondant à une valeur de tension maximale de fonctionnement du microcontrôleur 16.

L'étape de commande 64 comprend une deuxième sous-étape 68. Dans un mode de réalisation particulier, au cours de la deuxième sous-étape 68, le microcontrôleur 16 applique ou non le signal de commande 30 sur la grille du transistor NMOS 46. L'application du signal de commande 30 est fonction du résultat de la comparaison effectuée au cours de la première sous-étape 66. L'étape 62 est ensuite ré-effectuée, les étapes 62 et 64 étant successivement mises en oeuvre en boucle tant que le dispositif d'éclairage 10 est en mode « secours » ou en mode « repos ».

La figure 4 illustre la relation entre l'application du signal de commande 30 et le résultat de la comparaison effectuée au cours de la première sous-étape 66. En particulier, la figure 4 comprend une courbe 70 illustrant l'évolution de la tension U2 d'entrée du microcontrôleur 16 en fonction du temps.

Une première phase 72 débute à l'issue de l'étape 60, au cours de laquelle le condensateur 44 préalablement chargé se décharge et alimente électriquement le microcontrôleur 16, diminuant ainsi la valeur de la tension U2. Au cours de cette première phase 72, l'organe 24 mesure la tension d'entrée U2 lors de l'étape 62 et le microcontrôleur 16 détermine lors de la première sous-étape 66 que la valeur de la tension U2 est strictement comprise entre une valeur V1 égale à la tension minimale de fonctionnement du microcontrôleur 16 une valeur V2 égale à la tension maximale de fonctionnement du microcontrôleur 16. Lors de la deuxième sous-étape 68, le microcontrôleur 16 n'applique pas le signal de commande 30 sur la grille du transistor NMOS 46, ce qui correspond à une désactivation du module survolteur 22.

Lorsque la tension U2 atteint la valeur V1, l'organe 24 mesure la tension d'entrée U2 lors de l'étape 62 et le microcontrôleur 16 détermine lors de la première sous-étape 66 que la valeur de la tension U2 est égale à la valeur V1. Lors de la deuxième sous-étape 68, le microcontrôleur 16 applique alors le signal de commande 30 sur la grille du transistor NMOS 46, ce qui correspond à une activation du module survolteur 22. Le condensateur 44 se charge alors au cours d'une phase suivante 74. La tension U2 augmente alors, jusqu'à atteindre la valeur V2.

Lorsque la tension U2 atteint la valeur V2, l'organe 24 mesure la tension d'entrée U2 lors de l'étape 62 et le microcontrôleur 16 détermine lors de la première sous-étape 66 que la valeur de la tension U2 est égale à la valeur V2. Lors de la deuxième sous-étape 68, le microcontrôleur 16 n'applique pas le signal de commande 30 sur la grille du transistor NMOS 46, ce qui correspond à une désactivation du module survolteur 22. Le transistor NMOS 46 passe alors dans son état bloqué et une nouvelle phase 72 est effectuée.

Ainsi, le microcontrôleur 16 pilote l'application ou non du signal de commande 30 en fonction de la valeur de la mesure de la tension U2. Le condensateur 44 agit comme un réservoir d'énergie électrique pour l'alimentation électrique du microcontrôleur 16.

En variante, au cours de la deuxième sous-étape 68, le microcontrôleur 16 applique le signal de commande 30 sur la grille du transistor NMOS 46, quel que soit le résultat de la comparaison effectuée au cours de la première sous-étape 66. La commande du module survolteur 22 par le microcontrôleur 16 est alors obtenue en faisant varier le rapport cyclique du signal de commande 30 en fonction du résultat de la comparaison effectuée au cours de la première sous-étape 66. Plus précisément, lors de la première phase 72, le microcontrôleur 16 applique un signal de commande 30 ayant un rapport cyclique par exemple sensiblement égal à 0,01 sur la grille du transistor NMOS 46, ce qui correspond à une très faible sollicitation du module survolteur 22. Lors de la deuxième phase 74, le microcontrôleur 16 applique un signal de commande 30 ayant un rapport cyclique par exemple sensiblement égal à 0,9 sur la grille du transistor NMOS 46, ce qui correspond à une forte sollicitation du module survolteur 22. Ceci permet de réduire la consommation électrique du module survolteur 22 et d'ainsi réduire encore la consommation énergétique du dispositif d'éclairage 10.

Dans le mode de réalisation particulier de la figure 1, dans le mode « repos » du dispositif d'éclairage 10, la diode des moyens d'éclairage 18 est bloquée et le module survolteur 22 assure seul la fourniture de la tension minimale de fonctionnement du microcontrôleur 16.

On conçoit ainsi que le dispositif d'éclairage 10 selon l'invention permet de réduire la consommation énergétique du dispositif 10, tout en maintenant une tension de fonctionnement adéquate quel que soit le mode de fonctionnement du dispositif et en réduisant les coûts.

Selon l'exemple de réalisation de la figure 1, le microcontrôleur 16 commande en outre le circuit survolteur 28 via le signal de commande 32 au cours d'une étape non représentée sur les figures. Cette étape est par exemple effectuée en parallèle des étapes 62 et 64. Plus précisément, lorsque le dispositif d'éclairage 10 est en mode « secours », la valeur du signal de commande 32 correspond à une activation du circuit survolteur 28. Lorsque le dispositif d'éclairage 10 est en mode « repos », la valeur du signal de commande 32 correspond à une désactivation du circuit survolteur 28.

L'invention est décrite dans ce qui précède à titre d'exemple. Il est entendu que l'homme du métier est à même de réaliser différentes variantes de réalisation de l'invention sans pour autant sortir du cadre de l'invention. En particulier, bien que l'invention soit décrite en référence à un bloc autonome d'éclairage de sécurité, elle s'applique plus généralement à tout dispositif d'éclairage comprenant au moins un microcontrôleur, des moyens d'éclairage, un élément de stockage d'énergie, un module survolteur et un organe de mesure d'une tension électrique d'entrée d'alimentation du microcontrôleur.

## Revendications

1. Dispositif d'éclairage (10) comprenant :
• un microcontrôleur électronique (16) muni d'une borne d'entrée (26) propre à être reliée à une source électrique (14) fournissant un premier courant électrique d'alimentation,
• des moyens d'éclairage (18) propres à émettre un signal lumineux lorsque la valeur d'une grandeur (U1) relative au premier courant électrique d'alimentation est nulle ou inférieure à un seuil prédéterminé,
• un seul élément de stockage d'énergie (20) relié aux moyens d'éclairage (18), l'élément de stockage d'énergie (20) étant propre à fournir, lorsque la valeur de la grandeur (U1) relative au premier courant électrique d'alimentation est nulle ou inférieure à un seuil prédéterminé, un deuxième courant électrique d'alimentation (34), pour l'alimentation conjointe des moyens d'éclairage (18) et du microcontrôleur (16),
• un module survolteur (22) connecté entre l'élément de stockage d'énergie (20) et la borne d'entrée (26) du microcontrôleur (16),
• un organe (24) de mesure d'une tension électrique (U2) d'entrée d'alimentation du microcontrôleur (16), relié au microcontrôleur (16), le microcontrôleur (16) étant propre à émettre un signal (30) de commande du module survolteur (22), pour la commande dudit module (22) en fonction de la valeur de la tension électrique (U2) d'entrée d'alimentation mesurée ;
**caractérisé en ce qu'**il comporte en outre un circuit survolteur (28), connecté entre l'élément de stockage d'énergie (20) et les moyens d'éclairage (18), et en ce quel la borne d'entrée (26) du microcontrôleur électronique (16) est reliée aux moyens d'éclairage (18).

2. Dispositif d'éclairage (10) selon la revendication 1, **caractérisé en ce que** le module survolteur (22) est un convertisseur électrique de type boost.

3. Dispositif d'éclairage (10) selon la revendication 2, **caractérisé en ce que** le convertisseur électrique de type boost (22) comporte une inductance (40), une diode (42), un condensateur (44) et un composant électronique semi-conducteur de commutation (46), tel qu'un transistor, ledit composant électronique (46) comprenant deux électrodes de conduction et une électrode de commande, une des électrodes de l'inductance (40) étant connectée à une des électrodes de conduction du composant électronique (46) en un premier point de connexion (54), la diode (42) étant connectée par son anode au premier point de connexion (54) et par sa cathode à une des électrodes du condensateur (44), en un deuxième point de connexion (56), le deuxième point de connexion (56) étant relié à la borne d'entrée (26) du microcontrôleur (16), le signal (30) de commande du module survolteur (22) étant destiné à être appliqué sur l'électrode de commande du composant électronique (46).

4. Dispositif d'éclairage (10) selon l'une quelconque des revendications précédentes, **caractérisé en ce que** les moyens d'éclairage (18) comprennent au moins une diode électroluminescente et une diode, de préférence une diode Schottky, connectée entre l'anode de la diode électroluminescente et la borne d'entrée (26) du microcontrôleur (16), la cathode de la diode électroluminescente étant reliée à une masse électrique.

5. Dispositif d'éclairage (10) selon l'une quelconque des revendications précédentes, **caractérisé en ce que** l'élément de stockage d'énergie (20) est un élément d'accumulateurs, de préférence un élément d'accumulateurs de type NiMH ou NiCd présentant une tension nominale de valeur sensiblement égale à 1,2 V.

6. Dispositif d'éclairage (10) selon l'une quelconque des revendications 1 à 4, **caractérisé en ce que** l'élément de stockage d'énergie (20) est une pile alcaline, de préférence une pile alcaline présentant une tension nominale de valeur sensiblement égale à 1,5 V.

7. Dispositif d'éclairage (10) selon l'une quelconque des revendications précédentes, **caractérisé en ce que** le microcontrôleur (16) présente une tension minimale de fonctionnement, l'élément de stockage d'énergie (20) présentant une tension nominale de valeur inférieure à la valeur de la tension minimale de fonctionnement du microcontrôleur (16).

8. Dispositif d'éclairage (10) selon l'une quelconque des revendications précédentes, **caractérisé en ce que** l'élément de stockage d'énergie (20) est un élément électrique rechargeable propre à être relié à la source électrique (14) pour sa charge électrique.

9. Système électronique (1) comprenant une pluralité de dispositifs d'éclairage (10) et un organe (12) de surveillance des dispositifs d'éclairage (10), l'organe de surveillance (12) étant relié à chaque dispositif d'éclairage (10), **caractérisé en ce que** chaque dispositif d'éclairage (10) est conforme à l'une quelconque des revendications précédentes.

10. Procédé d'alimentation électrique d'un microcontrôleur (16) dans un dispositif d'éclairage (10), le microcontrôleur (16) étant muni d'une borne d'entrée (26) propre à être reliée à une source électrique (14) fournissant un premier courant électrique d'alimentation, le dispositif d'éclairage (10) comprenant en outre des moyens d'éclairage (18) propres à émettre un signal lumineux lorsque la valeur d'une grandeur (U1) relative au premier courant électrique d'alimentation est nulle ou inférieure à un seuil prédéterminé, un seul élément de stockage d'énergie (20) relié aux moyens d'éclairage (18), un module survolteur (22) connecté entre l'élément de stockage d'énergie (20) et la borne d'entrée (26) du microcontrôleur (16), et un organe (24) de mesure d'une tension électrique (U2) d'entrée d'alimentation du microcontrôleur (16), relié au microcontrôleur (16),
le procédé comprenant une étape initiale (60), lorsque la valeur de la grandeur (U1) relative au premier courant électrique d'alimentation est nulle ou inférieure à un seuil prédéterminé, de fourniture par l'élément de stockage d'énergie (20) d'un deuxième courant électrique d'alimentation (34),
le procédé comprenant en outre, lorsque la valeur de la grandeur (U1) relative au premier courant électrique d'alimentation est nulle ou inférieure à un seuil prédéterminé, les étapes suivantes :
• la mesure (62), par l'organe de mesure (24), de la tension électrique (U2) d'entrée d'alimentation du microcontrôleur (16), et
• la commande (64), par le microcontrôleur (16), du module survolteur (22), via l'émission d'un signal de commande (30) à destination du module survolteur (22), la commande étant fonction de la valeur de la tension électrique (U2) d'entrée d'alimentation mesurée,
**caractérisé en ce qu'**un circuit survolteur (28) est en outre connecté entre l'élément de stockage d'énergie (20) et les moyens d'éclairage (18), et **en ce que** la borne d'entrée (26) du microcontrôleur électronique (16) est reliée aux moyens d'éclairage (18), de sorte à réinjecter, sur la borne d'entrée (26) du microcontrôleur (16), un courant électrique d'alimentation des moyens d'éclairage (18)..

11. Procédé selon la revendication 10, **caractérisé en ce que** l'étape (64) de commande du module survolteur (22) comprend une première sous-étape (66) au cours de laquelle le microcontrôleur (16) compare la valeur de la tension électrique (U2) d'entrée d'alimentation mesurée à deux valeurs de tension (V1, V2) prédéterminées, et une deuxième sous-étape (68) au cours de laquelle le microcontrôleur (16) détermine l'émission ou non du signal (30) de commande du module survolteur (22) en fonction du résultat de la comparaison effectuée lors de la première sous-étape (66), la commande consistant en une non émission du signal de commande (30) permettant une désactivation du module survolteur (22) lorsque la valeur de la tension électrique (U2) d'entrée d'alimentation mesurée est égale à une première valeur de tension (V2) prédéterminée, et en une émission du signal de commande (30) permettant une activation du module survolteur (22) lorsque la valeur de la tension électrique (U2) d'entrée d'alimentation mesurée est égale à une deuxième valeur de tension (V1) prédéterminée, ladite deuxième valeur de tension (V1) étant inférieure à la première valeur de tension (V2).

## Patentansprüche

1. Beleuchtungsvorrichtung (10), umfassend:
- einen elektronischen Mikrocontroller (16), ausgestattet mit einer Eingangsklemme (26), die geeignet ist, an eine elektrische Quelle (14) angeschlossen zu sein, die einen ersten elektrischen Versorgungsstrom liefert,
- Beleuchtungsmittel (18), die geeignet sind, ein Leuchtsignal zu emittieren, wenn der Wert einer Größe (U1) mit Bezug auf den ersten elektrischen Versorgungsstrom null oder kleiner als eine vorbestimmte Schwelle ist,
- ein einziges Element zur Speicherung von Energie (20), das an die Beleuchtungsmittel (18) angeschlossen ist, wobei das Element zu Speicherung von Energie (20) geeignet ist, um, wenn der Wert der Größe (U1) mit Bezug auf den ersten elektrischen Versorgungsstrom null oder kleiner als eine vorbestimmte Schwelle ist, einen zweiten elektrischen Versorgungsstrom (34) zur gemeinsamen Versorgung der Beleuchtungsmittel (18) und des Mikrocontrollers (16) zu liefern,
- ein Boostermodul (22), das zwischen dem Element zur Speicherung von Energie (20) und der Eingangsklemme (26) des Mikrocontrollers (16) verbunden ist,
- ein Organ (24) zur Messung einer elektrischen Spannung (U2) des Versorgungseingangs des Mikrocontrollers (16), das an den Mikrocontroller (16) angeschlossen ist, wobei der Mikrocontroller (16) geeignet ist, ein Steuersignal (30) des Boostermoduls (22) zur Steuerung des Moduls (22) je nach dem gemessenen Wert der elektrischen Spannung (U2) des Versorgungseingangs zu emittieren;
**dadurch gekennzeichnet, dass** es außerdem eine Boosterschaltung (28) umfasst, die zwischen dem Element zur Speicherung von Energie (20) und den Beleuchtungsmitteln (18) verbunden ist, und dadurch, dass die Eingangsklemme (26) des elektronischen Mikrocontrollers (16) mit an die Beleuchtungsmittel (18) angeschlossen ist.

2. Beleuchtungsvorrichtung (10) nach Anspruch 1, **dadurch gekennzeichnet, dass** das Boostermodul (22) ein elektrischer Wandler vom Typ Booster ist.

3. Beleuchtungsvorrichtung (10) nach Anspruch 2, **dadurch gekennzeichnet, dass** der elektrische Wandler vom Typ Booster (22) eine Induktanz (40), eine Diode (42), einen Kondensator (44) und eine halbleitende elektronische Kommutationskomponente (46) wie z. B. einen Transistor umfasst, wobei die elektronische Komponente (46) zwei leitende Elektroden und eine Steuerelektrode umfasst, wobei eine der Elektroden der Induktanz (40) mit einer der leitenden Elektroden der elektronischen Komponente (46) an einem ersten Verbindungspunkt (54) verbunden ist, wobei die Diode (42) durch ihre Anode mit dem ersten Verbindungspunkt (54) und durch ihre Kathode mit einer der Elektroden des Kondensators (44) an einem zweiten Verbindungspunkt (56) verbunden ist, wobei der zweite Verbindungspunkt (56) an die Eingangsklemme (26) des Mikrocontrollers (16) angeschlossen ist, wobei das Steuersignal (30) des Boostermoduls (22) ausgelegt ist, um auf die Steuerelektrode der elektronischen Komponente (46) angewendet zu werden.

4. Beleuchtungsvorrichtung (10) nach einem beliebigen der vorhergehenden Ansprüche, **dadurch gekennzeichnet, dass** die Beleuchtungsmittel (18) mindestens eine elektrolumineszente Diode umfassen sowie eine Diode, vorzugsweise eine Schottky-Diode, die zwischen der Anode der elektrolumineszenten Diode und der Eingangsklemme (26) des Mikrocontrollers (16) verbunden ist, wobei die Kathode der elektrolumineszenten Diode an eine elektrische Masse angeschlossen ist.

5. Beleuchtungsvorrichtung (10) nach einem beliebigen der vorhergehenden Ansprüche, **dadurch gekennzeichnet, dass** das Element zur Speicherung von Energie (20) ein Akkumulatorenelement ist, vorzugsweise ein Akkumulatorenelement vom Typ NiMH oder NiCd, das eine nominale Spannung mit einem Wert von im Wesentlichen gleich 1,2 V aufweist.

6. Beleuchtungsvorrichtung (10) nach einem beliebigen der Ansprüche 1 bis 4, **dadurch gekennzeichnet, dass** das Element zur Speicherung von Energie (20) eine Alkalibatterie ist, vorzugsweise ein Alkalibatterie, die eine nominale Spannung mit einem Wert von im Wesentlichen gleich 1,5 V aufweist.

7. Beleuchtungsvorrichtung (10) nach einem beliebigen der vorhergehenden Ansprüche, **dadurch gekennzeichnet, dass** der Mikrocontroller (16) eine minimale Betriebsspannung aufweist, das Element zur Speicherung von Energie (20) eine nominale Spannung mit einem Wert aufweist, der kleiner als der Wert der nominalen Betriebsspannung des Mikrocontrollers (16) ist.

8. Beleuchtungsvorrichtung (10) nach einem beliebigen der vorhergehenden Ansprüche, **dadurch gekennzeichnet, dass** das Element zur Speicherung von Energie (20) ein aufladbares elektrisches Element ist, das geeignet ist, an die elektrische Quelle (14) für seine elektrische Ladung angeschlossen zu sein.

9. Elektronisches System (1), umfassend eine Vielzahl von Beleuchtungsvorrichtungen (10) und ein Organ (12) zur Überwachung der Beleuchtungsvorrichtungen (10), wobei das Organ zur Überwachung (12) an jede Beleuchtungsvorrichtung (10) angeschlossen ist, **dadurch gekennzeichnet, dass** jede Beleuchtungsvorrichtung (10) einem beliebigen der vorhergehenden Ansprüche entspricht.

10. Verfahren zur elektrischen Versorgung eines Mikrocontrollers (16) in einer Beleuchtungsvorrichtung (10), wobei der Mikrocontroller (16) mit einer Eingangsklemme (26) ausgestattet ist, die geeignet ist, an eine elektrische Quelle (14) angeschlossen zu werden, die einen ersten elektrischen Versorgungsstrom liefert, wobei die Beleuchtungsvorrichtung (10) außerdem Beleuchtungsmittel (18) umfasst, die geeignet sind, ein Leuchtsignal zu emittieren, wenn der Wert einer Größe (U1) mit Bezug auf den ersten elektrischen Versorgungsstrom null oder kleiner als eine vorbestimmte Schwelle ist, ein einziges Element zur Speicherung von Energie (20), das an die Beleuchtungsmittel (18) angeschlossen ist, ein Boostermodul (22), das zwischen dem Element zur Speicherung von Energie (20) und der Eingangsklemme (26) des Mikrocontrollers (16) verbunden ist, und ein Organ (24) zur Messung einer elektrischen Spannung (U2) des Versorgungseingangs des Mikrocontrollers (16), das an den Mikrocontroller (16) angeschlossen ist,
wobei das Verfahren einen anfänglichen Schritt (60), wenn der Wert der Größe (U1) mit Bezug auf den ersten elektrischen Versorgungsstrom null oder kleiner als eine vorbestimmte Schwelle ist, des Lieferns, durch das Element zur Speicherung von Energie (20), eines zweiten elektrischen Versorgungsstroms (34), umfasst,
wobei das Verfahren außerdem, wenn der Wert der Größe (U1) mit Bezug auf den ersten elektrischen Versorgungsstrom null oder kleiner als eine vorbestimmte Schwelle ist, die folgenden Schritte umfasst:
- Messen (62), durch das Messorgan (24), der elektrischen Spannung (U2) des Versorgungseingangs des Mikrocontrollers (16), und
- Steuern (64), durch den Mikrocontroller (16), des Boostermoduls (22) über die Emission eines Steuersignals (30) mit dem Ziel Boostermodul (22), wobei die Steuerung eine Funktion des gemessenen Werts der elektrischen Spannung (U2) des Versorgungseingangs ist,
**dadurch gekennzeichnet, dass** eine Boosterschaltung (28) außerdem zwischen dem Element zur Speicherung von Energie (20) und den Beleuchtungtsmitteln (18) verbunden ist, und dadurch, dass die Eingangsklemme (26) des elektronischen Mikrocontrollers (16) an die Beleuchtungsmittel (18) angeschlossen ist, um, auf der Eingangsklemme (26) des Mikrocontrollers (16), einen elektrischen Versorgungsstrom der Beleuchtungsmittel (18) wieder einzuspeisen.

11. Verfahren nach Anspruch 10, **dadurch gekennzeichnet, dass** der Schritt (64) des Steuerns des Boostermoduls (22) einen ersten Unterschritt (66) umfasst, im Laufe dessen der Mikrocontroller (16) den gemessenen Wert der elektrischen Spannung (U2) des Versorgungseingangs mit zwei vorbestimmten Spannungswerten (V1, V2) vergleicht, und einen zweiten Unterschritt (68), im Laufe dessen der Mikrocontroller (16) die Emission oder Nicht-Emission des Steuersignals (30) des Boostermoduls (22) je nach dem Ergebnis des Vergleichs bestimmt, der im ersten Unterschritt (66) durchgeführt wurde, wobei die Steuerung aus einer Nicht-Emission des Steuersignals (30) besteht, die eine Deaktivierung des Boostermoduls (22) ermöglicht, wenn der gemessene Wert der elektrischen Spannung (U2) der Versorgungseingangs gleich einem ersten vorbestimmten Spannungswert (V2) ist, und einer Emission des Steuersignals (30), die eine Aktivierung des Boostermoduls (22) ermöglicht, wenn der gemessene Wert der elektrischen Spannung (U2) des Versorgungseingangs gleich einem zweiten vorbestimmten Spannungswert (V1) ist, wobei der zweite Spannungswert (V1) kleiner als der erste Spannungswert (V2) ist.

## Claims

1. Lighting device (10) comprising:
- an electronic microcontroller (16) having an input terminal (26) adapted to be connected to an electrical source (14) supplying a first electric current supply,
- lighting means (18) suitable for emitting a light signal when the value of a variable (U1) on the first electric current supply is zero or less than a predetermined threshold,
- a single energy storage element (20) connected to the lighting means (18), the energy storage element (20) being adapted to supply, when the value of the variable (U1) on the first electric current supply is zero or less than a predetermine d threshold, a second electrical supply current (34), for the joint supply of the lighting means (18) and the microcontroller (16),
- a booster module (22) connected between the energy storage element (20) and the input terminal (26) of the microcontroller (16),
- a member (24) for measuring an electric voltage (U2) of the power input of the microcontroller (16), connected to the microcontroller (16), with the microcontroller (16) adapted to emit a signal (30) for controlling the booster module (22), for controlling said module (22) according to the value of the voltage (U2) of measured power input;
**characterised in that** it further comprises a booster circuit (28), connected between the energy storage element (20) and the lighting means (18), and **in that** the input terminal (26) of the electronic microcontroller (16) is connected to the lighting means (18).

2. Lighting device (10) according to claim 1, **characterised in that** the booster module (22) is an electric converter of the boost type.

3. Lighting device (10) according to claim 2, **characterised in that** the electric converter of the boost type (22) comprises an inductance (40), a diode (42), a capacitor (44) and an electronic switching semi-conductor component (46), such as a transistor, said electronic component (46) comprising two conduction electrodes and a control electrode, with one of the electrodes of the inductance (40) being connected to one of the conduction electrodes of the electronic component (46) at a first connection point (54), with the diode (42) being connected via its anode to the first connection point (54) and via its cathode to one of the electrodes of the capacitor (44), at a second connection point (56), with the second connection point (56) being connected to the input terminal (26) of the microcontroller (16), with the signal (30) for controlling the booster module (22) intended to be applied to the control electrode of the electronic component (46).

4. Lighting device (10) as claimed in any preceding claim, **characterised in that** the lighting means (18) comprise at least one light-emitting diode and a diode, more preferably a Schottky diode, connected between the anode of the light-emitting diode and the input terminal (26) of the microcontroller (16), with the cathode of the light-emitting diode being connected to an electrical earth.

5. Lighting device (10) as claimed in any preceding claim, **characterised in that** the energy storage element (20) is an element of accumulators, more preferably an element of accumulators of the NiMH or NiCd type than have a nominal voltage of a value substantially equal to 1.2 V.

6. Lighting device (10) according to any of claims 1 to 4, **characterised in that** the energy storage element (20) is an alkaline battery, more preferably an alkaline battery that has a nominal voltage of a value substantially equal to 1.5 V.

7. Lighting device (10) as claimed in any preceding claim, **characterised in that** the microcontroller (16) has a minimum operating voltage, with the energy storage element (20) having a nominal voltage with a value less than the value of the minimum operating voltage of the microcontroller (16).

8. Lighting device (10) as claimed in any preceding claim, **characterised in that** the energy storage element (20) is a rechargeable electrical element able to be connected to the electrical source (14) for its electrical charge.

9. Electronic system (1) comprising a plurality of lighting devices (10) and a member (12) for monitoring lighting devices (10), with the member for monitoring (12) being connected to each lighting device (10), **characterised in that** each lighting device (10) is in accordance with any one of the preceding claims.

10. Method for the electrical power supply of a microcontroller (16) in a lighting device (10), with the microcontroller (16) having an input terminal (26) adapted to be connected to an electrical source (14) supplying a first electric current supply, with the lighting device (10) further comprising lighting means (18) suitable for emitting a light signal when the value of a variable (U1) on the first electric current supply is zero or less than a predetermined threshold, a single energy storage element (20) connected to the lighting means (18), a booster module (22) connected between the energy storage element (20) and the input terminal (26) of the microcontroller (16), and a member (24) for measuring an electric voltage (U2) of power input of the microcontroller (16), connected to the microcontroller (16),
with the method comprising an initial step (60), when the value of the variable (U1) on the first electric current supply is zero or less than a predetermined threshold, of supplying via the energy storage element (20) of a second electrical supply current (34),
with the method further comprising, when the value of the variable (U1) on the first electric current supply is zero or less than a predetermined threshold, the following steps:
- measuring (62), by the organ for measuring (24), the electrical voltage (U2) of power input of the microcontroller (16), and
- the controlling (64), via the microcontroller (16), of the booster module (22), via the emission of a signal for controlling (30) intended for the booster module (22), with the control being according to the value of the electrical voltage (U2) of measured power input,
**characterised in that** a booster circuit (28) is furthermore connected between the energy storage element (20) and the lighting means (18), and **in that** the input terminal (26) of the electronic microcontroller (16) is connected to the lighting means (18), in such a way as to reinject, on the input terminal (26) of the microcontroller (16), an electrical supply current of the lighting means (18).

11. Method according to claim 10, **characterised in that** the step (64) of controlling the booster module (22) comprises a first substep (66) during which the microcontroller (16) compares the value of the electrical voltage (U2) of measured power input with two predetermined voltage values (V1, V2), and a second substep (68) during which the microcontroller (16) determined the emission or not of the signal (30) for controlling the booster module (22) according to the result of the comparison made during the first substep (66), with the control consisting in not emitting the signal for controlling (30) allowing for a deactivation of the booster module (22) when the value of the electrical voltage (U2) of measured power input is equal to a first predetermined value of voltage (V2), and in an emitting of the signal for controlling (30) allowing for an activation of the booster module (22) when the value of the electrical voltage (U2) of measured power input is equal to a second predetermined value of voltage (V1), with said second value of voltage (V1) being less than the first value of voltage (V2).
